# EUROPEAN PATENT APPLICATION

(11) **EP 4 797 628 A1**
(43) Date of publication of application: **26.08.2026**
(21) Application number: 26158189.6
(22) Date of filing: 12.02.2026
(51) Int. Cl.: H04L 12/403

(54) **MANAGEMENT DEVICE, COMMUNICATION NETWORK SYSTEM, AND VEHICLE**

(30) Priority: 25.02.2025 JP 2025028016
(71) Applicant: Toyota Jidosha Kabushiki Kaisha, Toyota-shi, Aichi-ken 471-8571 (JP)
(72) Inventor: KANEKO, Naoji, Toyota-shi, 471-8571 (JP)
(74) Representative: J A Kemp LLP

(57) **Abstract**

A plurality of communication devices is configured to have physical-layer collision avoidance functionality. A management device (20) includes processing circuitry (21) and a storage device (22). When a change occurs in powering status of power supply equipment for the communication devices in a communication network system (40), the processing circuitry (21) confirms, through communication in a first aspect with the communication devices, whether the communication devices are available for communication. After confirming that the communication devices being powered are available for communication, the processing circuitry (21) switches a communication setting on each of the communication devices and the management device (20) from a first setting for communication in the first aspect to a second setting for performing communication in a second aspect in which a time limit is longer than in communication in the first aspect.

## Description

### BACKGROUND OF THE INVENTION

### 1. Field of the Invention

The present disclosure relates to a management device, a communication network system, and a vehicle.

### 2. Description of Related Art

Japanese Unexamined Patent Application Publication No. 2024-100683 (JP 2024-100683 A) describes a communication network system that conforms with the 10BASE-T1S standard, which is standardized in IEEE802.3cg-2019. The communication network system includes a management device and a plurality of communication devices.

In the communication network system, a communication device communicates with another communication device by using physical-layer collision avoidance functionality. Hereinafter, the physical-layer collision avoidance functionality is referred to as PLCA. PLCA is an abbreviation of physical-layer collision avoidance.

In the communication network system including the communication devices having PLCA, each communication device transmits data in turn in a predetermined order after a beacon signal is transmitted from the management device.

### SUMMARY OF THE INVENTION

When a change occurs in powering status of power supply equipment for the communication devices in the communication network system, already active communication devices and the management device start usual communication according to PLCA after waiting until a communication device that is newly activated by being powered enters an available state for communication. After the change occurs in powering status of the power supply equipment for the communication devices, it is desirable that a period of time before the usual communication is started in the communication network system be short.

A first aspect of the present disclosure is a management device in a communication network system including a plurality of communication devices and the management device. Each of the communication devices is configured to have physical-layer collision avoidance functionality that, when the communication device has data to transmit, starts transmitting the data during a time limit when an own turn comes after the communication device detects a beacon signal, and the communication devices are configured to become available for communication by being powered. The management device is configured to, after the management device transmits the beacon signal, transmit the beacon signal again when confirming that all the communication devices that are available for communication have taken turns transmitting the data. The management device includes processing circuitry and a storage device. The processing circuitry is configured to perform when a change occurs in powering status of power supply equipment for the communication devices in the communication network system, confirming, through communication in a first aspect with the communication devices, whether the communication devices are available for communication, after confirming that the communication devices being powered in the communication network system are available for communication, switching communication settings on each of the communication devices being powered and the management device from a first setting for the communication in the first aspect to a second setting for performing communication in a second aspect in which the time limit is longer than in the communication in the first aspect, and after the communication settings are switched to the second setting, performing the communication in the second aspect with the communication devices.

In the management device according to the first aspect of the present disclosure, the communication network system may be mounted in a vehicle. The management device and the communication devices may be electronic control units included in the vehicle. The processing circuitry may be configured to detect that the change occurs in the powering status of the power supply equipment when switching of a power state of the vehicle takes place. The power state may be classified according to the number and type of devices that are powered.

In the management device according to the first aspect of the present disclosure, the processing circuitry may be configured to perform transmitting, through the communication in the first aspect, a wake confirmation frame to confirm whether the communication devices are available for communication, and when the processing circuitry receives a wake response frame indicating availability for communication from the communication device that has received the wake confirmation frame, determining that the communication device is available for communication.

In the management device according to the first aspect of the present disclosure, the storage device may be configured to store information on the communication devices to be powered in each powering status of the power supply equipment. The processing circuitry may be configured to perform when the change occurs in the powering status of the power supply equipment, confirming the communication devices to be powered in a powering status of the power supply equipment after the change, based on the information stored in the storage device, transmitting the wake confirmation frame repeatedly until the processing circuitry receives a plurality of the wake response frames from all the communication devices being powered, and when the processing circuitry receives the wake response frames from all the communication devices being powered, switching the communication settings from the first setting to the second setting.

In the management device according to the first aspect of the present disclosure, the processing circuitry may be configured to perform transmitting a wake information frame together with the wake confirmation frame through the communication in the first aspect. The wake information frame may be information on the communication device that has transmitted the wake response frame.

In the management device according to the first aspect of the present disclosure, the processing circuitry may be configured to perform, when the wake response frame is not received from the communication device being powered, transmitting a wakeup pulse to the communication device. The wakeup pulse may be a signal requesting that the communication device enter an available state for communication.

In the management device according to the first aspect of the present disclosure, the processing circuitry may be configured to perform when the wake response frame is not received from the communication device being powered, determining that a failure has occurred in the communication device, and after determining the failure in the communication device, switching the communication settings on the communication devices that have transmitted the wake response frames and the management device from the first setting to the second setting.

In the management device according to the first aspect of the present disclosure, the processing circuitry may be configured to perform, when switching the communication settings on the communication devices and the management device from the first setting to the second setting, transmitting, through the communication in the first aspect, a transition confirmation frame that indicates switching from the communication in the first aspect to the communication in the second aspect.

A communication network system that is a second aspect of the present disclosure includes a plurality of communication devices and a management device. Each of the communication devices is configured to have physical-layer collision avoidance functionality that, when the communication device has data to transmit, starts transmitting the data during a time limit when an own turn comes after the communication device detects a beacon signal, and become available for communication by being powered, and the management device is configured to, after the management device transmits the beacon signal, transmit the beacon signal again when confirming that all the communication devices that are available for communication have taken turns transmitting the data. The management device is configured to, when a change occurs in powering status of power supply equipment for the communication devices in the communication network system, confirm, through communication in a first aspect with the communication devices, whether the communication devices are available for communication. The management device is configured to, after confirming that the communication devices being powered in the communication network system are available for communication, switch communication settings on each of the communication devices being powered and the management device from a first setting for the communication in the first aspect to a second setting for performing communication in a second aspect in which the time limit is longer than in the communication in the first aspect. The management device and the communication devices are configured to perform the communication in the second aspect after the management device switches the communication settings to the second setting.

In the communication network system according to the second aspect of the present disclosure, the management device may be configured to transmit, through the communication in the first aspect, a wake confirmation frame to confirm whether the communication devices are available for communication. Each of the communication devices may be configured to, when the communication device receives the wake confirmation frame, transmit a wake response frame indicating that the communication device is available for communication. The management device may be configured to, when the management device receives the wake response frame, determine that the communication device that has transmitted the wake response frame is available for communication.

In the communication network system according to the second aspect of the present disclosure, the management device may be configured to store information on the communication devices to be powered in each powering status of the power supply equipment. The management device may be configured to, when the change occurs in the powering status of the power supply equipment, confirm the communication devices to be powered in a powering status of the power supply equipment after the change, based on the stored information. The management device may be configured to transmit the wake confirmation frame repeatedly until the management device receives a plurality of the wake response frames from all the communication devices being powered. The management device may be configured to, when the management device receives the wake response frames from all the communication devices being powered, switch the communication settings from the first setting to the second setting.

In the communication network system according to the second aspect of the present disclosure, the communication devices may be configured to transmit the wake response frame repeatedly as long as the communication devices continue to receive the wake confirmation frame.

In the communication network system according to the second aspect of the present disclosure, the management device may be configured to perform transmitting a wake information frame together with the wake confirmation frame through the communication in the first aspect. The wake information frame may be information on the communication device that has transmitted the wake response frame.

In the communication network system according to the second aspect of the present disclosure, each of the communication devices may be configured to, when grasping, through the communication in the first aspect, that the communication device to interact with in the communication in the second aspect is available for communication, switch the communication setting of the communication device from the first setting to the second setting. The communication device may be configured to start the communication in the second aspect with the communication device to interact with.

In the communication network system according to the second aspect of the present disclosure, the management device may be configured to transmit, through the communication in the first aspect, a transition confirmation frame that indicates switching from the communication in the first aspect to the communication in the second aspect. The management device may be configured to, after the management device transmits the transition confirmation frame, switch the communication setting of the management device from the first setting to the second setting. Each of the communication devices may be configured to, when the communication device receives the transition confirmation frame, transmit a transition acknowledgment frame that is a response to the transition confirmation frame. Each of the communication devices may be configured to, after the communication device transmits the transition acknowledgment frame, switch the communication setting of the communication device from the first setting to the second setting.

In the communication network system according to the second aspect of the present disclosure, the communication network system may be mounted in a vehicle. The management device and the communication devices may be electronic control units in the vehicle.

A vehicle that is a third aspect of the present disclosure includes the communication network system according to the second aspect of the present disclosure.

A fourth aspect of the present disclosure is a communication method in a communication network system including a plurality of communication devices and a management device. Each of the communication devices is configured to have physical-layer collision avoidance functionality that, when the communication device has data to transmit, starts transmitting the data during a time limit when an own turn comes after the communication device detects a beacon signal, and the communication devices are configured to become available for communication by being powered. The management device is configured to, after the management device transmits the beacon signal, transmit the beacon signal again when confirming that all the communication devices that are available for communication have taken turns transmitting the data. The communication method includes when a change occurs in powering status of power supply equipment for the communication devices in the communication network system, the management device confirming, through communication in a first aspect with the communication devices, whether the communication devices are available for communication, after confirming that the communication devices being powered in the communication network system are available for communication, the management device switching communication settings on each of the communication devices being powered and the management device from a first setting for the communication in the first aspect to a second setting for performing communication in a second aspect in which the time limit is longer than in the communication in the first aspect, and after the management device switches the communication settings to the second setting, the communication devices and the management device performing the communication in the second aspect.

A fifth aspect of the present disclosure is a communication program that is executed by processing circuitry of a management device in a communication network system including a plurality of communication devices and the management device. Each of the communication devices is configured to have physical-layer collision avoidance functionality that, when the communication device has data to transmit, starts transmitting the data during a time limit when an own turn comes after the communication device detects a beacon signal, and the communication devices are configured to become available for communication by being powered. The management device is configured to, after the management device transmits the beacon signal, transmit the beacon signal again when confirming that all the communication devices that are available for communication have taken turns transmitting the data. The communication program includes when a change occurs in powering status of power supply equipment for the communication devices in the communication network system, confirming, through communication in a first aspect with the communication devices, whether the communication devices are available for communication, after confirming that the communication devices being powered in the communication network system are available for communication, switching communication settings on each of the communication devices being powered and the management device from a first setting for the communication in the first aspect to a second setting for performing communication in a second aspect in which the time limit is longer than in the communication in the first aspect, and after the communication settings are switched to the second setting, performing the communication in the second aspect with the communication devices.

The management device, the communication network system, the vehicle, the communication method, and the communication program make it possible for the communication network system to quickly start usual communication when a change occurs in powering status of the power supply equipment for the communication devices in the communication network system.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram showing a configuration of a vehicle including a communication network system according to an embodiment;
FIG. 2 shows an aspect in which data is transmitted in accordance with physical-layer collision avoidance functionality;
FIG. 3 is a sequence chart showing an aspect of processing in the communication network system when switching of a power state of the vehicle takes place;

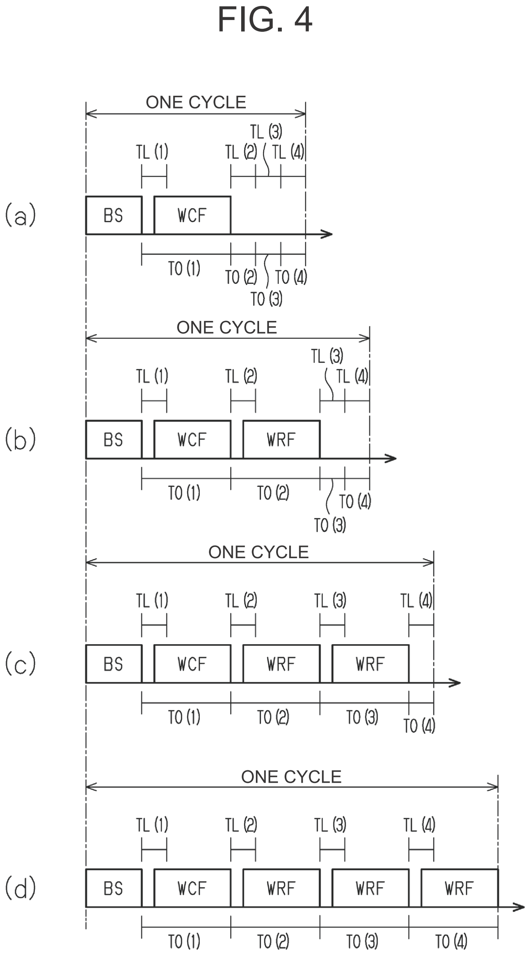

FIG. 4 shows changes in content of communication in communication in a first aspect, wherein part (a) of FIG. 4 shows the content of communication when a management device starts transmitting a wake confirmation frame and communication in the first aspect is started, part (b) of FIG. 4 shows the content of communication when a first device transmits a wake response frame, part(c) of FIG. 4 shows the content of communication when a second device, in addition to the first device, transmits a wake response frame, and part (d) of FIG. 4 shows the content of communication when a third device transmits a wake response frame;
FIG. 5 shows the content of communication when transition acknowledgment frames are transmitted through communication in the first aspect;
FIG. 6 shows communication in a second aspect;
FIG. 7 is a flowchart showing a flow of a series of processes performed by the management device when switching of the power state of the vehicle takes place;
FIG. 8 shows the content of communication in the first aspect in a first modification example; and
FIG. 9 shows the content of communication in the first aspect in a second modification example.

### DETAILED DESCRIPTION OF EMBODIMENTS

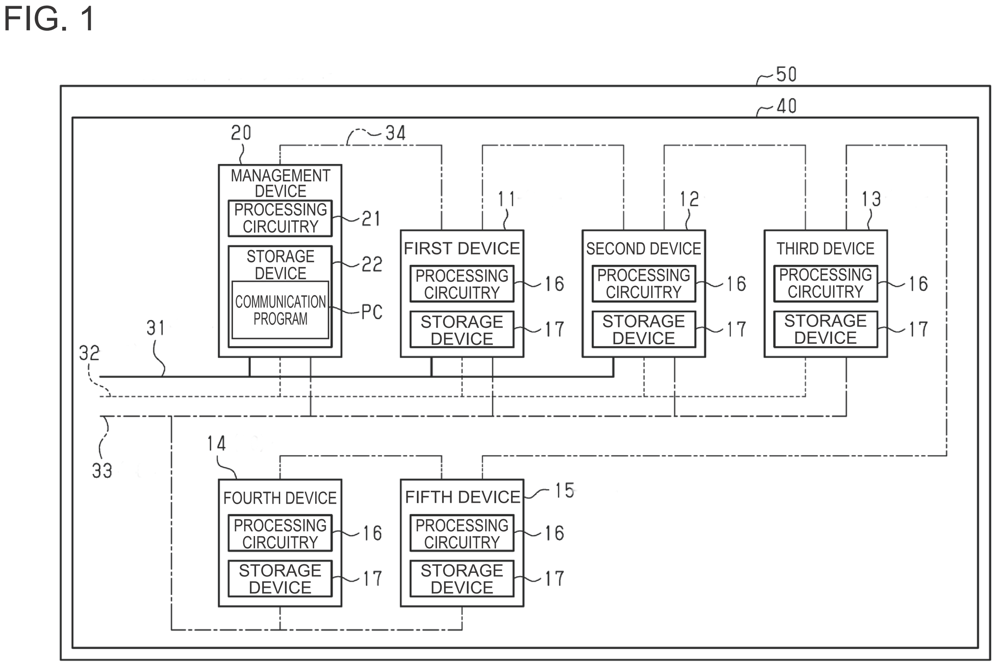

Hereinafter, an embodiment of a communication network system is described with reference to FIGS. 1 to 7.

### Configuration of Vehicle 50

As shown in FIG. 1, a vehicle 50 includes a communication network system 40. The communication network system 40 conforms with the 10BASE-T1S standard, which is standardized in IEEE802.3cg-2019.

The communication network system 40 includes a plurality of communication devices 10. The communication network system 40 includes, as the communication devices 10, a first device 11, a second device 12, a third device 13, a fourth device 14, and a fifth device 15. Each communication device 10 is an electronic control unit in the vehicle 50.

Each communication device 10 in the communication network system 40 includes processing circuitry 16 and a storage device 17. The storage device 17 stores a program. The processing circuitry 16 performs various processes by executing the program stored in the storage device 17. The processing circuitry 16 includes a processor.

As shown in FIG. 1, the communication network system 40 includes a management device 20. The management device 20 is an electronic control unit in the vehicle 50.
The management device 20 includes processing circuitry 21 and a storage device 22. The storage device 22 stores a program. The processing circuitry 21 performs various processes by executing the program stored in the storage device 22. The processing circuitry 21 includes a processor.

The storage device 22 included in the management device 20 stores a communication program PC. The communication program PC causes the processing circuitry 21 to perform processes related to communication with the communication devices 10 in the communication network system 40.

In FIG. 1, a communication line 34 is indicated by a dash-dot-dot line. As shown in FIG. 1, the communication line 34 connects the management device 20 and each of the communication devices 10 from the first device 11 to the fifth device 15 in series. In the communication network system 40, the individual communication devices 10 and the management device 20 are connected communicably with each other through the communication line 34.

Note that even if there is a device that is not in an available state for communication among the devices connected by the communication line 34, data arriving at the device in the communication network system 40 can pass through the device. For example, when the first device 11 is not in an available state for communication, data transmitted by the management device 20 through the communication line 34 can pass through the first device 11 and arrive at the second device 12 and the following communication devices 10.

Each communication device 10 implements a specific function in the vehicle 50 by communicating with other communication devices 10. The management device 20 transmits a beacon signal BS. The beacon signal BS is a signal serving as a point of reference for a timing for a communication device 10 to transmit data to another communication device 10. The management device 20 and the individual communication devices 10 realize a communication method described below by communicating with each other.

The management device 20 also has a function as a communication device 10, in addition to the function of transmitting the beacon signal BS. In other words, the management device 20 implements a specific function in the vehicle 50 by communicating with communication devices 10 in the communication network system 40. At the time, the management device 20, similarly to the communication devices 10, transmits data while timing the transmission of the data by using the beacon signal BS as a point of reference.

### Power State of Vehicle 50

The vehicle 50 has a plurality of power states. A power state is a state of the vehicle 50 that is classified according to the number and type of devices powered in the vehicle 50. As a result of the power state being switched, a change occurs in powering status of power supply equipment for the communication devices 10 in the communication network system 40.

In the communication network system 40, the management device 20 and the communication devices 10 are connected to a power supply line 30. The power supply line 30 is connected to a power supply source and powers the management device 20 and the communication devices 10.

The communication devices 10 and the management device 20 become available for communication by being powered. In other words, the number of devices that are available for communication in the communication network system 40 varies according to the power state of the vehicle 50. The vehicle 50 has, as the power states, a battery power state, an accessory power state, and an ignition power state.

The communication network system 40 includes, as the power supply lines 30, a first power supply line 31, a second power supply line 32, and a third power supply line 33. The communication network system 40 switches the power supply line 30 used for powering, depending on a power state of the vehicle 50, and thereby switches the power state of the vehicle 50.

The first power supply line 31 is a power supply line 30 used for powering when the vehicle 50 is in the battery power state. The battery power state is a power state when a system switch of the vehicle 50 is in an OFF state. In the battery power state, for example, a clock and the like included in the vehicle 50 are powered. As shown in FIG. 1, the first power supply line 31 is connected to the management device 20, the first device 11, and the second device 12. In other words, when the vehicle 50 is in the battery power state, the management device 20, the first device 11, and the second device 12 are available for communication.

The second power supply line 32 is a power supply line 30 used for powering when the vehicle 50 is in the accessory power state. The accessory power state is a power state when the system switch of the vehicle 50 is in an ACC state. In the accessory power state, for example, a car multimedia device, a car navigation device, and the like included in the vehicle 50, in addition to the clock, are powered. As shown in FIG. 1, the second power supply line 32 is connected to the management device 20, the first device 11, the second device 12, and the third device 13. In other words, when the vehicle 50 is in the accessory power state, the management device 20, the first device 11, the second device 12, and the third device 13 are available for communication.

The third power supply line 33 is a power supply line 30 used for powering when the vehicle 50 is in the ignition power state. The ignition power state is a power state when the system switch of the vehicle 50 is in an ON state. In the ignition power state, for example, a control device for an engine, an electric pump for coolant, and the like included in the vehicle 50, in addition to the clock and the car multimedia device, are powered. As shown in FIG. 1, the third power supply line 33 is connected to the management device 20, the first device 11, the second device 12, the third device 13, the fourth device 14, and the fifth device 15. In other words, when the vehicle 50 is in the ignition power state, the management device 20, the first device 11, the second device 12, the third device 13, the fourth device 14, and the fifth device 15 are available for communication.

### Outline of Physical-Layer Collision Avoidance Functionality

In the communication network system 40, the communication devices 10 and the management device 20 include physical-layer collision avoidance functionality. Hereinafter, the physical-layer collision avoidance functionality is referred to as PLCA. PLCA is an abbreviation of physical-layer collision avoidance.

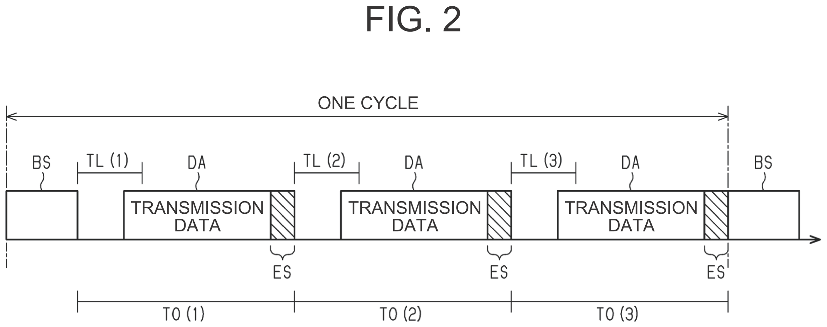

Hereinafter, an outline of PLCA is described with reference to FIG. 2. FIG. 2 shows an aspect in which a plurality of devices with PLCA performs communication in accordance with PLCA.
The communication in accordance with PLCA is performed in a network system including the devices with PLCA and a device that transmits a beacon signal BS. Hereinafter, the devices with PLCA and the device that transmits a beacon signal BS are collectively referred to as the devices in the network system.

When performing communication, the devices with PLCA transmit data by using the beacon signal BS as a point of reference. Order is predetermined in which each device with PLCA transmits data in turn after the beacon signal BS is transmitted. After the beacon signal BS is transmitted, each device with PLCA transmits data in turn in the predetermined order.

FIG. 2 shows an aspect in which data is transmitted during one cycle in the network system. A cycle is a period after the beacon signal BS is transmitted until all devices with PLCA that are available for communication in the network system are given respective opportunities to transmit data in turn and the transmission of the data by the last device with PLCA completes. In the case of FIG. 2, three devices with PLCA are available for communication in the network system.

In FIG. 2, time progresses in a direction from the left to the right. As shown in FIG. 2, when a cycle starts, first, the device that transmits the beacon signal BS transmits a beacon signal BS.

In FIG. 2, time limits TL and transmission data DA are shown, apart from beacon signals BS. The transmission data DA is data transmitted by a device with PLCA. When the transmission of transmission data DA is not started during a time limit TL, an opportunity for the device to transmit the transmission data DA ends. Then, the next device takes a turn transmitting transmission data DA.

In FIG. 2, the time limits TL are given numbers, respectively. The numbers indicate order in which the time limits TL given the numbers begin in turn after the beacon signal BS is transmitted. A time limit TL(1) shown in FIG. 2 indicates a time limit TL that begins first in the cycle after the beacon signal BS is transmitted. A time limit TL(2) shown in FIG. 2 is a time limit TL that begins second in the cycle after the beacon signal BS is transmitted. A time limit TL(3) shown in FIG. 2 is a time limit TL that begins third in the cycle after the beacon signal BS is transmitted.

In one cycle, turns assigned to the devices with PLCA correspond to the positions of the time limits TL in the order.
When the devices in the network system detect the beacon signal BS, the devices determine that a transmission opportunity TO is given to the device assigned the first turn. At the same time, the device assigned the first turn determines that the device's turn to transmit data comes.

When the device assigned the first turn determines that the device's turn comes, the device, if having data to transmit, starts transmitting the transmission data DA within the time limit TL(1).
As shown in FIG. 2, the device assigned the first turn transmits the transmission data DA with an end signal ES included at the end of the transmission data DA. The end signal ES is a signal indicating that the transmission of transmission data DA by a device transmitting the transmission data DA completes. At a time when the device assigned the first turn transmits the end signal ES, the transmission opportunity TO for the device assigned the first turn ends. In FIG. 2, a period during which the transmission opportunity TO is given to the device assigned the first turn is indicated as a transmission opportunity TO(1).

In some cases, a device with PLCA has no data to transmit when the device's turn to transmit data comes. When the device assigned the first turn has no data to transmit, the device cannot start transmitting transmission data DA within the time limit TL(1). In such a case, the transmission opportunity TO(1) for the device assigned the first turn ends as a result of passage of the time limit TL(1), without transmission data DA being transmitted.

When the devices in the network system detect the end signal ES transmitted by the device assigned the first turn, the devices determine that the transmission opportunity TO(1) for the device ends. When the time limit TL(1) has passed without the device assigned the first turn transmitting transmission data DA, the devices in the network system determine that the transmission opportunity TO(1) for the device ends.

When the transmission opportunity TO(1) for the device assigned the first turn ends, the devices in the network system determine that a transmission opportunity TO is given to the device assigned the second turn. At the same time, the device assigned the second turn determines that the device's turn to transmit data comes.

When the device assigned the second turn determines that the device's turn comes, the device, if having data to transmit, starts transmitting the transmission data DA within the time limit TL(2).
As shown in FIG. 2, the device assigned the second turn transmits the transmission data DA with an end signal ES included at the end of the transmission data DA. At a time when the device assigned the second turn transmits the end signal ES, the transmission opportunity TO for the device assigned the second turn ends. In FIG. 2, a period during which the transmission opportunity TO is given to the device assigned the second turn is indicated as a transmission opportunity TO(2).

When the device assigned the second turn has no data to transmit, the device cannot start transmitting transmission data DA within TO(2). In such a case, the transmission opportunity TO(2) for the device assigned the second turn ends as a result of passage of the time limit TL(2) without transmission data DA being transmitted.

When the devices in the network system detect the end signal ES transmitted by the device assigned the second turn, the devices determine that the transmission opportunity TO(2) for the device ends. When the time limit TL(2) has passed without the device assigned the second turn transmitting transmission data DA, the devices in the network system determine that the transmission opportunity TO(2) for the device ends.

When the transmission opportunity TO(2) for the device assigned the second turn ends, the devices in the network system determine that a transmission opportunity TO is given to the device assigned the third turn. At the same time, the device assigned the third turn determines that the device's turn to transmit data comes.

When the device assigned the third turn determines that the device's turn comes, the device, if having data to transmit, starts transmitting the transmission data DA within the time limit TL(3).
As shown in FIG. 2, the device assigned the third turn transmits the transmission data DA with an end signal ES included at the end of the transmission data DA. At a time when the device assigned the third turn transmits the end signal ES, the transmission opportunity TO for the device assigned the third turn ends. In FIG. 2, a period during which the transmission opportunity TO is given to the device assigned the third turn is indicated as a transmission opportunity TO(3).

When the device assigned the third turn has no data to transmit, the device cannot start transmitting transmission data DA within the time limit TL(3). In such a case, the transmission opportunity TO(3) for the device assigned the third turn ends as a result of passage of the time limit TL(3) without transmission data DA being transmitted.

One cycle ends when a transmission opportunity TO for a device with PLCA assigned the last turn among the devices with PLCA ends. In FIG. 2, the one cycle ends when the transmission opportunity TO(3) for the device assigned the third turn ends.

The device that transmits the beacon signal BS determines that the one cycle ends when detecting an end of the transmission opportunity TO as many times as the number of the devices that are available for communication.
As shown in FIG. 2, when the device that transmits the beacon signal BS determines that the one cycle ends, the device transmits a beacon signal BS again.

As described above, the devices with PLCA transmit transmission data DA in turn in the predetermined order while timing the transmission by using the beacon signal BS as a point of reference. Thus, in the network system including the devices with PLCA, collision between transmission data DA is restrained.

### Aspect of Communication When Switching of Power State Takes Place

A communication device 10 makes a setup to communicate with other communication devices 10 when the communication device 10 switches from a non-powered state to a powered state due to switching of the power state. Then, when the setup completes, the powered communication device 10 becomes able to communicate with the other communication devices 10.

In the communication network system 40, the communication devices 10 and the management device 20 cannot perform usual communication before all communication devices 10 being powered in a power state of the vehicle 50 become available for communication. The usual communication is communication that the communication devices 10 perform to fulfill respective specific functions in the vehicle 50. In the usual communication, communication in accordance with PLCA described in FIG. 2 is performed.

Hereinafter, the usual communication performed by the communication devices 10 and the management device 20 is referred to as communication in a second aspect. In the communication network system 40, the communication devices 10 and the management device 20 can perform communication in the second aspect by setting respective communication settings to a second setting. The communication setting is a setting for the communication devices 10 and the management device 20 to perform communication in the communication network system 40.

In the communication network system 40, in order for communication in the second aspect to be quickly performed after switching of the power state of the vehicle 50 takes place, communication in the first aspect is performed before communication in the second aspect is performed. Both communication in the first aspect and communication in the second aspect are communication performed in accordance with PLCA. The length of a time limit TL and the content of data transmitted as transmission data DA are different between communication in the first aspect and communication in the second aspect.

### Example of Aspect of Processing Performed When Switching of Power State Takes Place

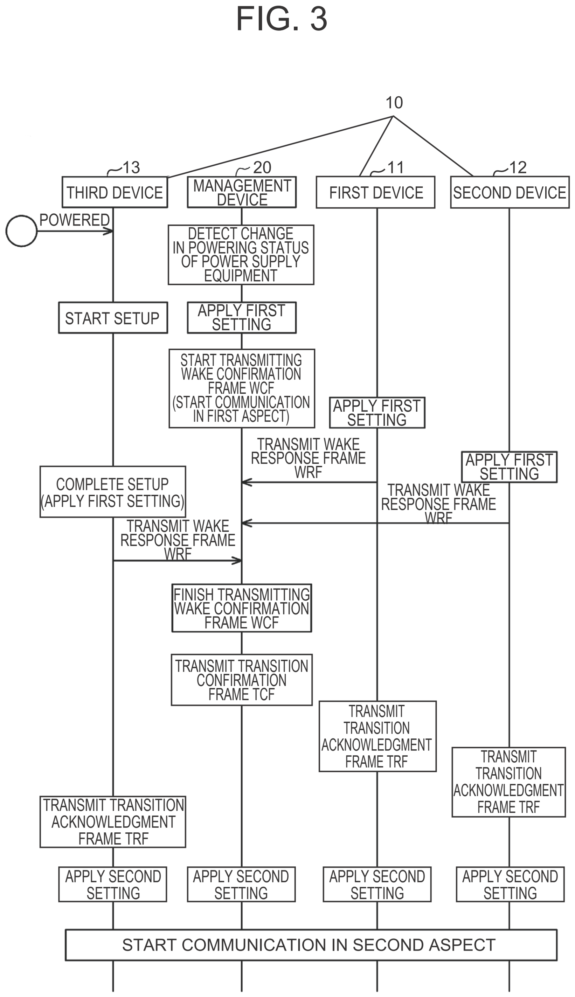

FIG. 3 shows an aspect of processing performed in the communication network system 40 after switching of the power state of the vehicle 50 takes place. Hereinafter, with reference to FIGS. 3 to 6, a description is given of a series of processes performed in the communication network system 40 when switching of the power state of the vehicle 50 takes place. Note that in the description below, processes performed by the processing circuitry 16 are described as processes performed by the communication devices 10, and processes performed by the processing circuitry 21 are described as processes performed by the management device 20.

FIG. 3 shows an example of an aspect of processing in the communication network system 40 when the vehicle 50 enters the accessory power state from the battery power state.
When the state of the vehicle 50 is the battery power state, the management device 20, the first device 11, and the second device 12 are being powered. When the state of the vehicle 50 switches from the battery power state to the accessory power state, the management device 20, the first device 11, and the second device 12 remains in the powered states.

In FIG. 3, the management device 20, the first device 11, and the second device 12 perform communication in the second aspect before the power state switches to the accessory power state. The communication devices 10 and the management device 20 set the respective communication settings to the second setting when performing communication in the second aspect.

As shown in FIG. 3, first, the management device 20 detects a change in powering status of the power supply equipment. When a power supply line 30 used for powering switches to another, the management device 20 determines that switching of the power state of the vehicle 50 takes place.

In some cases, the management device 20 can grasp a current power state from the content of communication with communication devices 10 in the communication network system 40. The management device 20 may determine that switching of the power state takes place, based on the content of communication with other communication devices 10.

When switching of the power state is detected, the management device 20 applies the first setting as the communication setting.
When the state of the vehicle 50 switches from the battery power state to the accessory power state, the third device 13 switches from a non-powered state to a powered state. In FIG. 3, the third device 13 is being powered.

The powered third device 13 starts making a setup.

### Communication in First Aspect in FIG. 3

When the management device 20 enters a state of being able to perform communication in the first aspect as a result of the management device 20 applying the first setting, the communication network system 40 starts communication in the first aspect.

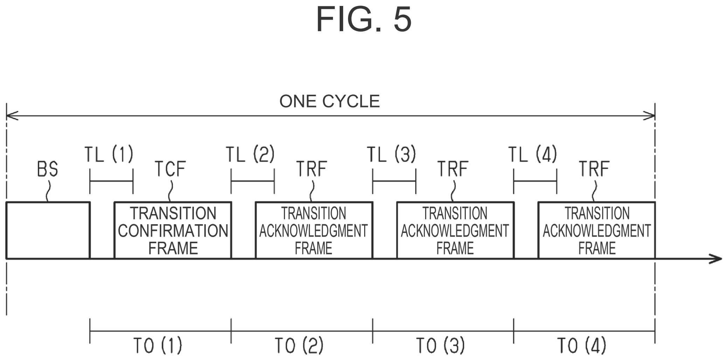

FIGS. 4 and 5 show an example of changes in content of communication after communication in the first aspect is started.
In FIGS. 4 and 5, time progresses in a direction from the left to the right. In FIGS. 4 and 5, a beacon signal BS, time limits TL, and transmission opportunities TO are shown as in FIG. 2. In FIGS. 4 and 5, numbers are given to the time limits TL, respectively, as in FIG. 2. The numbers indicate order in which the time limits TL given the numbers begin in turn after the beacon signal BS is transmitted. In FIGS. 4 and 5, rectangles shown to the right of the beacon signal BS are transmission data DA. In FIGS. 4 and 5, depiction of end signals ES is omitted.

As described earlier, order in which transmission data DA is transmitted is predetermined in PLCA. In the case shown in FIG. 3, the management device 20 transmits transmission data DA in TO(1). In the case shown in FIG. 3, the first device 11 transmits transmission data DA in TO(2). In the case shown in FIG. 3, the second device 12 transmits transmission data DA in TO(3). In the case shown in FIG. 3, the third device 13 transmits transmission data DA in TO(4).

Part (a) of FIG. 4 shows the content of communication when the management device 20 starts transmitting a wake confirmation frame WCF and communication in the first aspect is started. As shown in part (a) of FIG. 4, after transmitting the beacon signal BS, the management device 20 transmits the wake confirmation frame WCF as transmission data DA in TO(1). The wake confirmation frame WCF is a message to confirm whether the communication devices 10 are available for communication. As shown in part (a) of FIG. 4, in this stage, the communication devices 10 do not transmit transmission data DA.

As shown in FIG. 3, after communication in the first aspect is started, the first device 11 that has received the wake confirmation frame WCF applies the first setting as the communication setting. In other words, the first device 11 switches the communication setting to apply from the second setting to the first setting.

As shown in FIG. 3, after communication in the first aspect is started, the second device 12 that has received the wake confirmation frame WCF applies the first setting as the communication setting. In other words, the second device 12 switches the communication setting to apply from the second setting to the first setting.

As described above, when switching of the power state of the vehicle 50 takes place, the management device 20 transmits the wake confirmation frame WCF through communication in the first aspect. Then, each communication device 10 that remains in the powered state before and after the switching switches the communication setting from the second setting to the first setting when the communication device 10 receives the wake confirmation frame WCF.

In the communication network system 40, after a communication device 10 that remains in the powered state before and after the switching switches the communication setting to the first setting, the communication device 10 transmits a wake response frame WRF when communication in the first aspect becomes possible. The wake response frame WRF is a message indicating that the communication device 10 enters an available state for communication. When the management device 20 receives the wake response frame WRF, the management device 20 determines that the communication device 10 that has transmitted the wake response frame WRF is available for communication.

The management device 20 repeats transmitting a wake confirmation frame WCF until wake response frames WRF are received from all communication devices 10 that are powered in the accessory power state. Each communication device 10 transmits a wake response frame WRF each time the communication device 10 receives a wake confirmation frame WCF in the available state for communication.

Part (b) of FIG. 4 shows the content of communication when the first device 11 transmits a wake response frame WRF. As shown in part (b) of FIG. 4, after transmitting the beacon signal BS, the management device 20 transmits the wake confirmation frame WCF as transmission data DA in TO(1). As shown in part (b) of FIG. 4, the first device 11 transmits the wake response frame WRF as transmission data DA in TO(2). As shown in part (b) of FIG. 4, in this stage, the second device 12 and the third device 13 do not transmit transmission data DA.

Part (c) of FIG. 4 shows the content of communication when the second device 12, in addition to the first device 11, transmits a wake response frame WRF. As shown in part (c) of FIG. 4, after transmitting the beacon signal BS, the management device 20 transmits the wake confirmation frame WCF as transmission data DA in TO(1). As shown in part (c) of FIG. 4, the first device 11 transmits the wake response frame WRF as transmission data DA in TO(2). As shown in part (c) of FIG. 4, the second device 12 transmits the wake response frame WRF as transmission data DA in TO(3). As shown in part (c) of FIG. 4, in this stage, the third device 13 does not transmit transmission data DA.

A communication device 10 that is powered due to switching of the power state applies the first setting as the communication setting in a setup.
Part (d) of FIG. 4 shows the content of communication when the third device 13 transmits a wake response frame WRF. As shown in part (d) of FIG. 4, after transmitting the beacon signal BS, the management device 20 transmits the wake confirmation frame WCF as transmission data DA in TO(1). As shown in part (d) of FIG. 4, the first device 11 transmits the wake response frame WRF as transmission data DA in TO(2). As shown in part (d) of FIG. 4, the second device 12 transmits the wake response frame WRF as transmission data DA in TO(3). As shown in part (d) of FIG. 4, the third device 13 transmits the wake response frame WRF as transmission data DA in TO(4).

As described above, in the communication network system 40, a communication device 10 that is powered due to switching of the power state transmits a wake response frame WRF when a setup completes.

As shown in part (d) of FIG. 4, in this stage, all the communication devices 10 that are powered in the accessory power state transmit the wake response frames WRF. In FIG. 3, the management device 20 finishes transmitting the wake confirmation frame WCF when the management device 20 receives the wake response frames WRF from all the communication devices 10 that are powered in the accessory power state. Then, the management device 20 transmits a transition confirmation frame TCF. In other words, the management device 20 transmits a transition confirmation frame TCF when the management device 20 determines that all the communication devices 10 that are powered in a power state after the switching are available for communication. The transition confirmation frame TCF indicates that the aspect of communication in the communication network system 40 switches from the first aspect to the second aspect. After transmitting the transition confirmation frame TCF, the management device 20 switches its own communication setting from the first setting to the second setting.

A communication device 10 that has received the transition confirmation frame TCF transmits a transition acknowledgment frame TRF. In the example shown in FIG. 3, the first device 11, the second device 12, and the third device 13 transmit transition acknowledgment frames TRF. The transition acknowledgment frame TRF is a response to the transition confirmation frame TCF, indicating that the communication device 10 receives the transition confirmation frame TCF.

FIG. 5 shows the content of communication when the transition acknowledgment frames TRF are transmitted. As shown in FIG. 5, after transmitting a beacon signal BS, the management device 20 transmits the transition confirmation frame TCF as transmission data DA in TO(1).

As shown in FIG. 5, the first device 11 that has received the transition confirmation frame TCF transmits the transition acknowledgment frame TRF as transmission data DA in TO(2). As shown in FIG. 5, the second device 12 that has received the transition confirmation frame TCF transmits the transition acknowledgment frame TRF as transmission data DA in TO(3). As shown in FIG. 5, the third device 13 that has received the transition confirmation frame TCF transmits the transition acknowledgment frame TRF as transmission data DA in TO(4).

As shown in FIG. 3, after transmitting the transition confirmation frame TCF, the management device 20 applies the second setting as the communication setting. In other words, after transmitting the transition confirmation frame TCF, the management device 20 switches the communication setting from the first setting to the second setting.

As shown in FIG. 3, after transmitting the transition acknowledgment frame TRF, the first device 11 applies the second setting as the communication setting. In other words, after transmitting the transition acknowledgment frame TRF, the first device 11 switches the communication setting from the first setting to the second setting.

As shown in FIG. 3, after transmitting the transition acknowledgment frame TRF, the second device 12 applies the second setting as the communication setting. In other words, after transmitting the transition acknowledgment frame TRF, the second device 12 switches the communication setting from the first setting to the second setting.

As shown in FIG. 3, after transmitting the transition acknowledgment frame TRF, the third device 13 applies the second setting as the communication setting. In other words, after transmitting the transition acknowledgment frame TRF, the third device 13 switches the communication setting from the first setting to the second setting.

As described above, each communication device 10 that is powered in the power state after the switching transmits the transition acknowledgment frame TRF and also switches the communication setting from the first setting to the second setting when the communication device 10 receives the transition confirmation frame TCF. Thereafter, the communication network system 40 performs communication in the second aspect.

As described above, when switching of the power state of the vehicle 50 takes place, first, the management device 20 transmits a wake confirmation frame WCF through communication in the first aspect.

A communication device 10 that remains in a powered state before and after the switching of the power state switches its own communication setting to the first setting when the communication device 10 receives the wake confirmation frame WCF. Thereafter, when communication in the first aspect becomes possible, the communication device 10 transmits a wake response frame WRF through communication in the first aspect.

A communication device 10 that has become powered due to the switching of the power state starts a setup after powered. Then, when the setup completes and communication becomes possible, the communication device 10 transmits a wake response frame WRF through communication in the first aspect.

When the management device 20 receives the wake response frames WRF from all communication devices 10 that are powered in a power state after the switching, the management device 20 transmits a transition confirmation frame TCF, whereby the communication settings on the management device 20 and the communication devices 10 are switched to the second setting.

Note that the communication in the first aspect shown in FIG. 4 is only an example. Although the first device 11 transmits the wake response frame WRF earlier than the second device 12 and the third device 13 in FIG. 3, there are some cases where the second device 12 or the third device 13 transmits the wake response frame WRF earlier, depending on order in which communication becomes possible. Moreover, a case is also conceivable where the first device 11, the second device 12, and the third device 13 transmit the wake response frames WRF at the same time.

### Communication in Second Aspect in FIG. 3

As shown in FIG. 3, after the communication devices 10 and the management device 20 apply the second setting, the communication network system 40 starts communication in the second aspect.

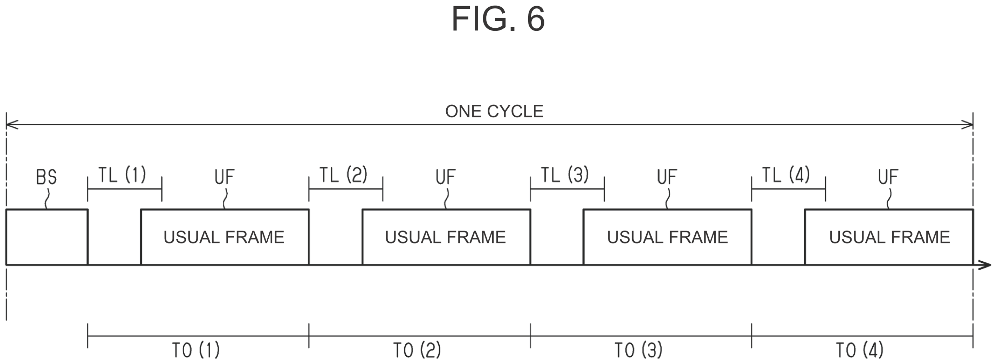

FIG. 6 shows communication in the second aspect performed in the accessory power state. In FIG. 6, time progresses in a direction from the left to the right. In FIG. 6, a beacon signal BS, time limits TL, and transmission opportunities TO are shown as in FIG. 2. In FIG. 6, numbers are given to the time limits TL, respectively, as in FIG. 2. The numbers indicate order in which the time limits TL given the numbers begin in turn after the beacon signal BS is transmitted. In FIG. 6, rectangles shown to the right of the beacon signal BS are transmission data DA. In FIG. 6, depiction of end signals ES is omitted.

In communication in the second aspect, after transmitting the beacon signal BS, the management device 20 transmits a usual frame UF as transmission data DA in TO(1). In communication in the second aspect, the first device 11 transmits a usual frame UF as transmission data DA in TO(2). In communication in the second aspect, the second device 12 transmits a usual frame UF as transmission data DA in TO(3). In communication in the second aspect, the third device 13 transmits a usual frame UF as transmission data DA in TO(4). The usual frame UF is data that a communication device 10 transmits to implement a specific function in the vehicle 50.

The time limit TL in communication in the second aspect is longer than the time limit TL in communication in the first aspect.

In communication in the second aspect, the communication devices 10 transmit data with various contents as usual frames UF in order to implement respective specific functions in the vehicle 50. In contrast, in communication in the first aspect, transmission data DA transmitted by the management device 20 is a wake confirmation frame WCF and a transition confirmation frame TCF. Transmission data DA transmitted by each communication device 10 is a wake response frame WRF and a transition acknowledgment frame TRF. In other words, in communication in the first aspect, the contents of transmission data DA transmitted by the communication devices 10 and the management device 20 are determined. Accordingly, in communication in the first aspect, transmission data DA transmitted by the communication devices 10 and the management device 20 does not unexpectedly lengthen. As such, in communication in the first aspect, the communication devices 10 and the management device 20 can prepare and start transmitting transmission data DA during a short time limit TL.

In communication in the first aspect in which transmission data DA is shorter and the time limit TL is also shorter as described above, the length of one cycle up until the end thereof is likely to be shorter than in communication in the second aspect. In the communication network system 40, it is confirmed, through communication in the first aspect in which one cycle is likely to be shorter, whether communication devices 10 are available for communication, and when the availability for communication can be confirmed, the aspect of communication is switched to the second aspect that is usual communication.

### Aspect of Processing Performed by Management Device 20

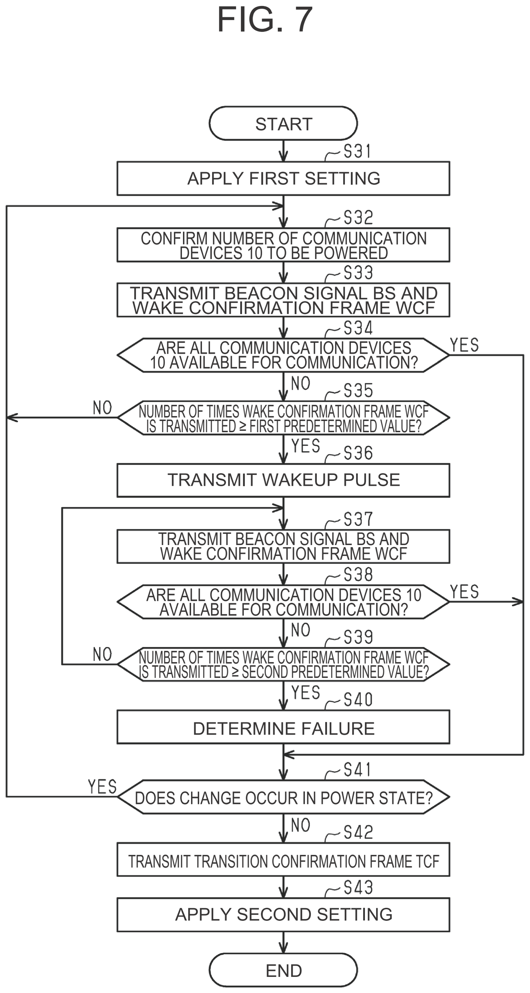

FIG. 7 shows an aspect of a series of processes performed by the management device 20 to realize the communication in the aspects shown in FIGS. 3 to 6. The communication program PC causes the processing circuitry 21 to perform the series of processes shown in FIG. 7. When a change in powering status of the power supply equipment is detected, the processing circuitry 21 starts the series of processes shown in FIG. 7. Hereinafter, "S" stands for step.

As shown in FIG. 7, after detecting a change in powering status of the power supply equipment, the processing circuitry 21 performs a process in S31. In the process in S31, the processing circuitry 21 applies the first setting as the communication setting.

Thereafter, the processing circuitry 21 performs a process in S32. In the process in S32, the processing circuitry 21 confirms the number of communication devices 10 to be powered in a power state after switching. The management device 20 stores, in the storage device 22, communication devices 10 that are powered in each powering status of the power supply equipment, that is, in each power state of the vehicle 50. In the process in S32, the processing circuitry 21 confirms the number of communication devices 10 to be powered in the power state after switching, based on the information stored in the storage device 22. Note that the management device 20 can confirm the power state after switching, from a power supply line 30 being used for powering, or through communication with communication devices 10.

Thereafter, the processing circuitry 21 performs a process in S33. In the process in S33, the processing circuitry 21 transmits a beacon signal BS and a wake confirmation frame WCF. At the time, the processing circuitry 21 transmits the beacon signal BS and the wake confirmation frame WCF through communication in the first aspect.

Thereafter, the processing circuitry 21 performs a process in S34. In the process in S34, the processing circuitry 21 determines whether all the communication devices 10 are available for communication. When any one or some communication devices 10 do not transmit a wake response frame WRF during the cycle after the process in S33 is performed, the processing circuitry 21 determines that not all the communication devices 10 are available for communication. When it is determined in the process in S34 that not all the communication devices 10 are available for communication (S34: NO), the processing circuitry 21 moves the processing to S35.

In a process in S35, the processing circuitry 21 determines whether the number of times a wake confirmation frame WCF is transmitted is a first predetermined value or more. The first predetermined value is a threshold value to determine whether the number of times a wake confirmation frame WCF is transmitted is large.

When it is determined in the process in S35 that the number of times a wake confirmation frame WCF is transmitted is smaller than the first predetermined value (S35: NO), the processing circuitry 21 performs the processes in and after S32 again. In other words, the processing circuitry 21 transmits a wake confirmation frame WCF repeatedly as long as wake response frames WRF have not been received from all the communication devices 10 and the number of times a wake confirmation frame WCF is transmitted is smaller than the first predetermined value.

When it is determined in the process in S35 that the number of times a wake confirmation frame WCF is transmitted is the first predetermined value or more (S35: YES), the processing circuitry 21 performs a process in S36. In other words, when wake response frames WRF have not been received from all the communication devices 10 and the number of times a wake confirmation frame WCF is transmitted is the first predetermined value or more, the processing circuitry 21 moves the processing to S36.

In the process in S36, the processing circuitry 21 transmits a wakeup pulse to a communication device 10 that has not transmitted a wake response frame WRF. As described with reference to FIG. 3, when a communication device 10 is powered, the communication device 10 starts a setup voluntarily. The wakeup pulse is a signal requesting that a communication device 10 that must have been powered but has not transmitted a wake response frame WRF start a setup and enter an available state for communication.

Thereafter, the processing circuitry 21 performs a process in S37. In the process in S37, the processing circuitry 21 transmits a beacon signal BS and a wake confirmation frame WCF. The process is similar to the process performed by the processing circuitry 21 in S33.

Thereafter, the processing circuitry 21 performs a process in S38. In the process in S38, the processing circuitry 21 determines whether all the communication devices 10 are available for communication. The process is similar to the process performed by the processing circuitry 21 in S34.

When it is determined in the process in S38 that not all the communication devices 10 are available for communication (S38: NO), the processing circuitry 21 moves the processing to S39. In the process in S39, the processing circuitry 21 determines whether the number of times a wake confirmation frame WCF is transmitted is a second predetermined value or more. The second predetermined value is a threshold value to determine whether the number of times a wake confirmation frame WCF is transmitted is large. The second predetermined value is greater than the first predetermined value.

When it is determined in the process in S39 that the number of times a wake confirmation frame WCF is transmitted is smaller than the second predetermined value (S39: NO), the processing circuitry 21 performs the processes in and after S37 again. In other words, the processing circuitry 21 transmits a wake confirmation frame WCF repeatedly as long as wake response frames WRF have not been received from all the communication devices 10 and the number of times a wake confirmation frame WCF is transmitted is smaller than the second predetermined value.

When it is determined in the process in S39 that the number of times a wake confirmation frame WCF is transmitted is the second predetermined value or more (S39: YES), the processing circuitry 21 performs a process in S40. In other words, when wake response frames WRF have not been received from all the communication devices 10 and the number of times a wake confirmation frame WCF is transmitted is the second predetermined value or more, the processing circuitry 21 moves the processing to S40.

In the process in S40, the processing circuitry 21 determines that a failure has occurred in a communication device 10 that does not transmit a wake response frame WRF. Thereafter, the processing circuitry 21 moves the processing to S41.
The processing circuitry 21 also moves the processing to S41 when it is determined in the process in S34 that all the communication devices 10 are available for communication (S34: YES). The processing circuitry 21 also moves the processing to S41 when it is determined in the process in S38 that all the communication devices 10 are available for communication (S38: YES).

In the process in S41, the processing circuitry 21 determines whether a change occurs in power state of the vehicle 50 during a period after the series of processes shown in FIG. 7 is started and before the process in S41 is performed.
When it is determined in the process in S41 that a change occurs in power state of the vehicle 50 (S41: YES), the processing circuitry 21 performs the processes in and after S32 again. In other words, after switching of the power state takes place, when switching of the power state of the vehicle 50 takes place again before the process in S41 is performed, the processing circuitry 21 transmits a wake confirmation frame WCF again and confirms whether the communication devices 10 are available for communication.

When it is determined in the process in S41 that there is no change in power state of the vehicle 50 (S41: NO), the processing circuitry 21 moves the processing to S42. In the process in S42, the processing circuitry 21 transmits a transition confirmation frame TCF. At the time, the processing circuitry 21 transmits the transition confirmation frame TCF through communication in the first aspect.

Thereafter, the processing circuitry 21 performs a process in S43. In the process in S43, the processing circuitry 21 applies the second setting as the communication setting. Thereafter, the processing circuitry 21 terminates the series of processes shown in FIG. 7.

Thereafter, the management device 20 starts communication in the second aspect with the communication devices 10.

### Operation in Present Embodiment

When a change occurs in powering status of the power supply equipment for the communication devices 10 in the communication network system 40, the management device 20 confirms whether communication devices 10 being powered are available for communication, through communication in the first aspect in which the time limit TL is shorter than in communication in the second aspect. Then, after confirming that the communication devices 10 being powered are available for communication, the management device 20 starts communication in the second aspect with the communication devices 10. As described above, in communication in the first aspect, transmission data DA transmitted by the communication devices 10 and the management device 20 does not unexpectedly lengthen. In communication in the first aspect, the communication devices 10 and the management device 20 each can prepare and start transmitting transmission data DA during a short time limit TL.

As described above, in communication in the first aspect in which transmission data DA is shorter and the time limit TL is also shorter, the length of one cycle up until the end thereof is likely to be shorter than in communication in the second aspect.

### Effects of Present Embodiment

(1) When a change occurs in powering status of the power supply equipment for the communication devices 10 in the communication network system 40, the management device 20 can cause the communication network system 40 to quickly start usual communication.
(2) The communication network system 40 is mounted in the vehicle 50. The management device 20 and the communication devices 10 are electronic control units included in the vehicle 50. The processing circuitry 21 detects that a change occurs in powering status of the power supply equipment when switching of the power state of the vehicle 50 takes place. The power state is classified according to the number and type of devices that are powered.

A change occurs in powering status of the power supply equipment for the communication devices 10 in the communication network system 40 when switching of the power state of the vehicle 50 takes place. When a change occurs in power state of the vehicle 50, the management device 20 detects that a change occurs in powering status of the power supply equipment for the communication devices 10 in the communication network system 40, and starts communication in the first aspect. Thus, the management device 20 can change the aspect of communication in the communication network system 40, according to a change in powering status of the power supply equipment for the communication devices 10 in the communication network system 40.

(3) In communication in the first aspect, the processing circuitry 21 performs transmitting a wake confirmation frame WCF to confirm whether the communication devices 10 are available for communication. When a wake response frame WRF indicating availability for communication is received from a communication device 10 that has received the wake confirmation frame WCF, the processing circuitry 21 performs determining that the communication device 10 is available for communication.

With regard to a communication device 10 that has returned a wake response frame WRF in response to a wake confirmation frame WCF, the management device 20 determines that the communication device 10 is in an available state for communication. Thus, the management device 20 can grasp communication devices 10 that are in available states for communication after a change occurs in powering status of the power supply equipment for the communication devices 10 in the communication network system 40.

(4) The storage device 22 stores information on communication devices 10 that are powered in each powering status of the power supply equipment. When a change occurs in powering status of the power supply equipment, the processing circuitry 21 performs confirming communication devices 10 to be powered in a powering status of the power supply equipment after the change, based on the information stored in the storage device 22. The processing circuitry 21 performs transmitting a wake confirmation frame WCF repeatedly until wake response frames WRF are received from all the communication devices 10 being powered. When wake response frames WRF are received from all the communication devices 10 being powered, the processing circuitry 21 performs switching the communication settings from the first setting to the second setting.

When wake response frames WRF are received from all communication devices 10 being powered, the management device 20 switches the communication settings on the management device 20 and the communication devices 10 from the first setting to the second setting. Thus, the management device 20 can switch the aspect of communication in the communication network system 40 after all the communication devices 10 being powered enter available states for communication.

(5) When a wake response frame WRF is not received from a communication device 10 being powered, the processing circuitry 21 performs transmitting a wakeup pulse that is a signal requesting that the communication device 10 enter an available state for communication.

When a wake response frame WRF is not received from a communication device 10 that must have been powered, the management device 20 requests that the communication device 10 enter an available state for communication by transmitting a wakeup pulse to the communication device 10. Thus, when a wake response frame WRF cannot be received, the management device 20 can bring the aspect of communication in the communication network system 40 into a switchable state as quickly as possible.

(6) When a wake response frame WRF is not received from a communication device 10 being powered, the processing circuitry 21 performs determining that a failure has occurred in the communication device 10. After determining the failure in the communication device 10, the processing circuitry 21 performs switching the communication settings on the communication devices 10 that have transmitted wake response frames WRF and the management device 20 from the first setting to the second setting.

When a wake response frame WRF cannot be received from a communication device 10, the management device 20 determines that a failure has occurred in the communication device 10 and, for communication devices 10 that have transmitted wake response frames WRF, switches the aspect of communication. Thus, while the management device 20 can identify the communication device 10 in which the failure has occurred, the management device 20 can switch the aspect of communication for the communication devices 10 that are available for communication.

(7) When switching the communication settings on the communication devices 10 and the management device 20 from the first setting to the second setting, the processing circuitry 21 performs transmitting, through communication in the first aspect, a transition confirmation frame TCF that indicates switching from communication in the first aspect to communication in the second aspect.

The management device 20 switches the communication settings on the management device 20 and the communication devices 10 by transmitting a transition confirmation frame TCF. Thus, the management device 20 can switch the aspect of communication for the communication devices 10 and the management device 20 in the communication network system 40 all at once.

(8) When a change occurs in powering status of the power supply equipment for the communication devices 10, the communication network system 40 confirms whether communication devices 10 being powered are available for communication, through communication in the first aspect in which the time limit TL is shorter than in communication in the second aspect that is usual communication. After the communication network system 40 confirms that the communication devices 10 being powered are available for communication, the management device 20 and the communication devices 10 start communication in the second aspect. Thus, when a change occurs in powering status of the power supply equipment for the communication devices 10 in the communication network system 40, the communication network system 40 can quickly start usual communication.

(9) In communication in the first aspect, the management device 20 transmits a wake confirmation frame WCF to confirm whether the communication devices 10 are available for communication. When a communication device 10 receives the wake confirmation frame WCF, the communication device 10 transmits a wake response frame WRF indicating that the communication device 10 is availability for communication. When the management device 20 receives a wake response frame WRF, the management device 20 determines that the communication device 10 that has transmitted the wake response frame WRF is available for communication.

With regard to a communication device 10 that has returned a wake response frame WRF in response to a wake confirmation frame WCF, the communication network system 40 determines that the communication device 10 is in an available state for communication. Thus, the communication network system 40 can grasp communication devices 10 that are in available states for communication after a change occurs in powering status of the power supply equipment for the communication device 10 in the communication network system 40.

(10) The management device 20 stores information indicating communication devices 10 that are powered in each powering status of the power supply equipment. When a change occurs in powering status of the power supply equipment, the management device 20 confirms communication devices 10 to be powered in a powering status of the power supply equipment after the change, based on the information stored in the storage device 22. The management device 20 transmits a wake confirmation frame WCF repeatedly until wake response frames WRF are received from all the communication devices 10 being powered. When wake response frames WRF are received from all the communication devices 10 being powered, the management device 20 switches the communication settings from the first setting to the second setting.

In the communication network system 40, when wake response frames WRF are received from all communication devices 10 being powered, the management device 20 switches the communication settings on the management device 20 and the communication devices 10 from the first setting to the second setting. Thus, the communication network system 40 can switch the aspect of communication after all the communication devices 10 being powered enter available states for communication.

(11) In the communication network system 40, each communication device 10 transmits a wake response frame WRF repeatedly as long as the communication device 10 continue to receive a wake confirmation frame WCF.
In the communication network system 40, each communication device 10 transmits a wake response frame WRF repeatedly. Thus, the communication network system 40 can let a communication device 10 that enters an available state for communication after a wake response frame WRF is first transmitted know information on a communication device 10 that is already in an available state for communication.

(12) The management device 20 transmits, through communication in the first aspect, a transition confirmation frame TCF that indicates switching from communication in the first aspect to communication in the second aspect. After transmitting the transition confirmation frame TCF, the management device 20 switches its own communication setting from the first setting to the second setting. When a communication device 10 receives the transition confirmation frame TCF, the communication device 10 transmits a transition acknowledgment frame TRF that is a response to the transition confirmation frame TCF. After transmitting the transition acknowledgment frame TRF, the communication device 10 switches its own communication setting from the first setting to the second setting.

In the communication network system 40, the management device 20 and communication devices 10 switch the communication settings, respectively, with a transition confirmation frame TCF serving as a trigger. Thus, the communication network system 40 can switch the aspect of communication for the communication devices 10 being powered and the management device 20 all at once.

(13) The communication network system 40 is mounted in the vehicle 50. The management device 20 and the communication devices 10 are electronic control units in the vehicle 50. Thus, when a change occurs in powering status of the power supply equipment for the electronic control units in the vehicle 50, the communication network system 40 can quickly start usual communication.

(14) When a change occurs in powering status of the power supply equipment for the communication devices 10, the vehicle 50 confirms whether communication devices 10 being powered are available for communication, through communication in the first aspect in which the time limit TL is shorter than in communication in the second aspect that is usual communication. After the vehicle 50 confirms that the communication devices 10 being powered are available for communication, the management device 20 and the communication devices 10 start communication in the second aspect. Thus, when a change occurs in powering status of the power supply equipment for the communication devices 10 in the communication network system 40, the vehicle 50 can cause the communication network system 40 to quickly start usual communication.

(15) The communication method is a communication method in the communication network system 40. The communication network system 40 includes the communication devices 10 and the management device 20. Each of the communication devices 10 has physical-layer collision avoidance functionality that, when the communication device 10 has data to transmit, starts transmitting the data within a time limit TL when an own turn comes after a beacon signal BS is detected, and the communication devices 10 become available for communication by being powered. After transmitting the beacon signal BS, the management device 20 transmits a beacon signal BS again when confirming that all the communication devices 10 that are available for communication have taken turns transmitting the data. As described with reference to FIG. 3, the communication method includes a step of, by the management device 20, confirming, through communication in the first aspect with the communication devices 10, whether the communication devices 10 are available for communication when a change occurs in powering status of the power supply equipment for the communication devices 10 in the communication network system 40. As described with reference to FIG. 3, the communication method includes a step of, by the management device 20, switching the communication settings on the management device 20 and communication devices 10 being powered from the first setting for communication in the first aspect to the second setting for performing communication in the second aspect after confirming that the communication devices 10 being powered are available for communication in the communication network system 40. In communication in the second aspect, the time limit TL is longer than in communication in the first aspect. As described with reference to FIG. 3, the communication method includes a step of, by the communication devices 10 and the management device 20, performing communication in the second aspect after the communication settings are switched to the second setting.

When a change occurs in powering status of the power supply equipment for the communication devices 10 in the communication network system 40, the communication method confirms whether communication devices 10 being powered are available for communication, through communication in the first aspect in which the time limit TL is shorter than in communication in the second aspect that is usual communication. In the communication method, after the management device 20 confirms that the communication devices 10 being powered are available for communication, the management device 20 and the communication devices 10 start communication in the second aspect that is usual communication. Thus, when a change occurs in powering status of the power supply equipment for the communication devices 10 in the communication network system 40, the communication method can cause the communication network system 40 to quickly start usual communication.

(16) When a change occurs in powering status of the power supply equipment for the communication devices 10 in the communication network system 40, the communication program PC confirms whether communication devices 10 being powered are available for communication, through communication in the first aspect in which the time limit TL is shorter than in communication in the second aspect that is usual communication. After confirming that the communication devices 10 being powered are available for communication, the communication program PC starts communication in the second aspect with the communication devices 10. Thus, when a change occurs in powering status of the power supply equipment for the communication devices 10 in the communication network system 40, the communication program PC can cause the communication network system 40 to quickly start usual communication.

In the embodiment, the communication program PC is stored in the storage device 22. The communication program PC may be provided in a state of being recorded on a recording medium. Examples of the recording medium on which the communication program PC is recorded include a memory, such as a USB memory, an SSD, or an SD card, a CD-ROM, an optical disk, and the like.

### Modification Examples

The embodiment can be carried out with changes made as described below. The embodiment and the following modification examples can be carried out in combination with each other to such an extent that no technical contradiction occurs.
- It is not necessary for the communication network system 40 to be mounted in the vehicle 50.

- It is not necessary for the management device 20 and the communication devices 10 to be electronic control units included in the vehicle 50.
- When a change occurs in powering status of the power supply equipment, it is not necessary for the management device 20 to confirm communication devices 10 to be powered in a powering status of the power supply equipment after the change, based on the information stored in the storage device 22. For example, the management device 20 may confirm communication devices 10 to be powered in a powering status of the power supply equipment after the change, through communication with the communication devices 10.
   - It is not necessary for the management device 20 to transmit a wakeup pulse.
- When a wake response frame WRF is not received from a communication device 10 being powered, it is not necessary for the management device 20 to determine that a failure has occurred in the communication device 10.
   - In FIG. 3, each communication device 10 that remains in a powered state before and after switching of the power state takes place switches the communication setting from the second setting to the first setting when the communication device 10 receives a wake confirmation frame WCF from the management device 20. A communication device 10 that remains in a powered state before and after switching of the power state takes place may detect a change in powering status of the power supply equipment by itself and switch the communication setting from the second setting to the first setting.
   - The management device 20 transmits a wake confirmation frame WCF apart from a beacon signal BS through communication in the first aspect. The management device 20 may add information indicating a wake confirmation frame WCF to a beacon signal BS, and may thus omit transmitting a wake confirmation frame WCF separately from a beacon signal BS.
   - The communication devices 10 each transmit a wake response frame WRF repeatedly as long as the communication devices 10 continue to receive a wake confirmation frame WCF in communication in the first aspect. An aspect after a communication device 10 transmits a wake response frame WRF once is not limited to the embodiment.

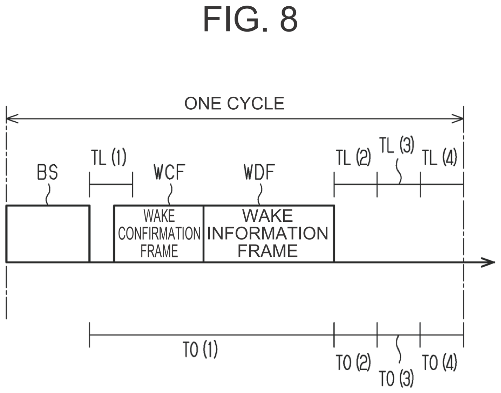

FIG. 8 shows an example of the content of communication in the first aspect performed in the communication network system 40 according to a first modification example.

In FIG. 8, the management device 20 transmits a wake information frame WDF together with a wake confirmation frame WCF as transmission data DA in TO(1). The wake information frame WDF is information indicating a communication device 10 that is already in an available state for communication. When a wake response frame WRF is received from a communication device 10, the management device 20 thereafter, when transmitting a wake confirmation frame WCF, also transmits a wake information frame WDF together that indicates the communication device 10 that has transmitted the wake response frame WRF. In such a case, the communication device 10 that has transmitted the wake response frame WRF does not need to further transmit a wake response frame WRF after transmitting the wake response frame WRF once. Accordingly, when the communication network system 40 performs communication in the first aspect according to the aspect shown in FIG. 8, one cycle is likely to be shorter than in communication in the first aspect according to the embodiment.

In such a case, in communication in the first aspect, the processing circuitry 21 transmits, together with a wake confirmation frame WCF, a wake information frame WDF that is information on a communication device 10 that has transmitted a wake response frame WRF.

The management device 20 transmits, together with a wake confirmation frame WCF, information indicating a communication device 10 that is available for communication. Thus, the management device 20 can let a communication device 10 that becomes available for communication after a wake response frame WRF is transmitted know the information on the communication device 10 that is already in an available state for communication.

In such a case, in the communication network system 40, the management device 20 transmits, together with the wake confirmation frame WCF, a wake information frame WDF that is the information on the communication device 10 that has transmitted the wake response frame WRF, in communication in the first aspect.

In the communication network system 40, the management device 20 transmits, together with a wake confirmation frame WCF, information indicating a communication device 10 that is available for communication. Thus, the communication network system 40 can let a communication device 10 that becomes available for communication after a wake response frame WRF is transmitted know the information on the communication device 10 that is already in an available state for communication.

When the management device 20 transmits a wake information frame WDF, the need for a communication device 10 to repeatedly transmit a wake confirmation frame WCF is eliminated.

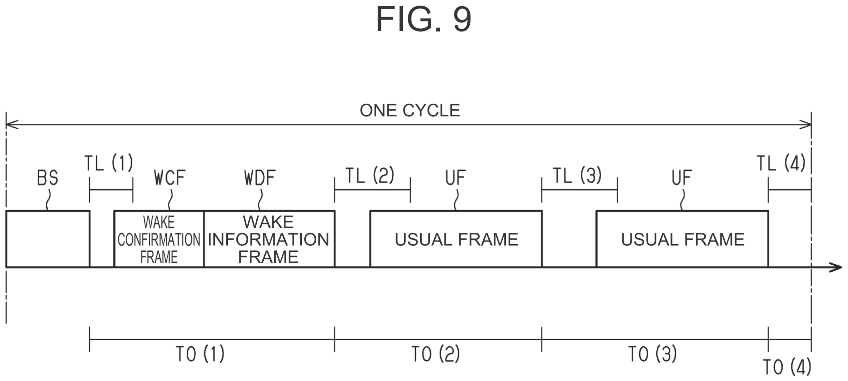

FIG. 9 shows an example of the content of communication in the first aspect performed in the communication network system 40 according to a second modification example.

FIG. 9 shows the content of communication after each of communication devices 10 that transmit transmission data DA in TO(2) and TO(3), respectively, has already transmitted a wake response frame WRF once.

In FIG. 9, the management device 20 transmits a wake information frame WDF together with a wake confirmation frame WCF as transmission data DA in TO(1). At the time, the management device 20 transmits the wake information frame WDF indicating the communication devices 10 that transmit transmission data DA in TO(2) and TO(3).

In FIG. 9, the communication device 10 that transmits transmission data DA in TO(2) and the communication device 10 that transmits transmission data DA in TO(3) are in the relation of communicating transmission data DA in communication in the second aspect.

The communication device 10 that transmits transmission data DA in TO(2) grasps, through the wake response frame WRF or the wake information frame WDF, that the communication device 10 that transmits transmission data DA in TO(3) is available for communication. Thereafter, the communication device 10 that transmits transmission data DA in TO(2) switches the communication setting from the first setting to the second setting.

The communication device 10 that transmits transmission data DA in TO(3) grasps, through the wake response frame WRF or the wake information frame WDF, that the communication device 10 that transmits transmission data DA in TO(2) is available for communication. Thereafter, the communication device 10 that transmits transmission data DA in TO(3) switches the communication setting from the first setting to the second setting.

Thereafter, the communication device 10 that transmits transmission data DA in TO(2) and the communication device 10 that transmits transmission data DA in TO(3) perform communication in the second aspect. In other words, as shown in FIG. 9, the communication device 10 that transmits transmission data DA in TO(2) and the communication device 10 that transmits transmission data DA in TO(3) each transmit a usual frame UF, based on the time limit TL in communication in the second aspect.

In such a case, when a communication device 10 grasps, through communication in the first aspect, that another communication device 10 to interact with in communication in the second aspect is available for communication, the communication device 10 switches its own communication setting from the first setting to the second setting. The communication device 10 starts communication in the second aspect with the other communication device 10 to interact with.

In the communication network system 40, when a communication device 10 grasps that another communication device 10 to interact with in communication in the second aspect is available for communication, the communication device 10 starts communication in the second aspect with the other communication device 10 to interact with even if the management device 20 is performing communication in the first aspect. Thus, the communication network system 40 can cause communication devices 10 that can perform communication in the second aspect to perform communication in the second aspect ahead of the others.

### Supplements

Technical ideas that can be conceived from the embodiment and the modification examples are described below.

### Supplement 1

A management device in a communication network system including a plurality of communication devices and the management device, each of the communication devices having physical-layer collision avoidance functionality that, when the communication device has data to transmit, starts transmitting the data during a time limit when an own turn comes after a beacon signal is detected, the communication devices becoming available for communication by being powered, the management device, after transmitting the beacon signal, transmitting the beacon signal again when confirming that all the communication devices that are available for communication have taken turns transmitting the data, the management device including processing circuitry, and a storage device, wherein the processing circuitry is configured to perform when a change occurs in powering status of power supply equipment for the communication devices in the communication network system, confirming, through communication in a first aspect with the communication devices, whether the communication devices are available for communication, after confirming that the communication devices being powered in the communication network system are available for communication, switching communication settings on each of the communication devices being powered and the management device from a first setting for communication in the first aspect to a second setting for performing communication in a second aspect in which the time limit is longer than in communication in the first aspect, and after the communication settings are switched to the second setting, performing communication in the second aspect with the communication devices.

### Supplement 2

The management device according to supplement 1, wherein: the communication network system is mounted in a vehicle, the management device and the communication devices are electronic control units included in the vehicle, and the processing circuitry detects that the change occurs in powering status of the power supply equipment when switching of a power state of the vehicle takes place, the power state being classified according to the number and type of devices that are powered.

### Supplement 3

The management device according to supplement 1 or 2, wherein the processing circuitry performs: transmitting, through communication in the first aspect, a wake confirmation frame to confirm whether the communication devices are available for communication, and when a wake response frame indicating availability for communication is received from the communication device that has received the wake confirmation frame, determining that the communication device is available for communication.

### Supplement 4

The management device according to supplement 3, wherein: the storage device stores information on the communication devices to be powered in each powering status of the power supply equipment, and the processing circuitry performs, when the change occurs in powering status of the power supply equipment, confirming the communication devices to be powered in a powering status of the power supply equipment after the change, based on the information stored in the storage device, transmitting the wake confirmation frame repeatedly until the wake response frames are received from all the communication devices being powered, and, when the wake response frames are received from all the communication devices being powered, switching the communication settings from the first setting to the second setting.

### Supplement 5

The management device according to supplement 3 or 4, wherein the processing circuitry performs transmitting a wake information frame together with the wake confirmation frame through communication in the first aspect, the wake information frame being information on the communication device that has transmitted the wake response frame.

### Supplement 6

The management device according to any one of supplements 3 to 5, wherein the processing circuitry performs, when the wake response frame is not received from the communication device being powered, transmitting a wakeup pulse to the communication device, the wakeup pulse being a signal requesting that the communication device enter an available state for communication.

### Supplement 7

The management device according to any one of supplements 3 to 6, wherein the processing circuitry performs: when the wake response frame is not received from the communication device being powered, determining that a failure has occurred in the communication device, and after determining the failure in the communication device, switching the communication settings on the communication devices that have transmitted the wake response frames and the management device from the first setting to the second setting.

### Supplement 8

The management device according to any one of supplements 1 to 7, wherein the processing circuitry performs, when switching the communication settings on the communication devices and the management device from the first setting to the second setting, transmitting, through communication in the first aspect, a transition confirmation frame that indicates switching from communication in the first aspect to communication in the second aspect.

### Supplement 9

A communication network system including: a plurality of communication devices each having physical-layer collision avoidance functionality that, when the communication device has data to transmit, starts transmitting the data during a time limit when an own turn comes after a beacon signal is detected, the communication devices becoming available for communication by being powered, and a management device that, after transmitting the beacon signal, transmits the beacon signal again when confirming that all the communication devices that are available for communication have taken turns transmitting the data, wherein the management device, when a change occurs in powering status of power supply equipment for the communication devices in the communication network system, confirms, through communication in a first aspect with the communication devices, whether the communication devices are available for communication, the management device, after confirming that the communication devices being powered in the communication network system are available for communication, switches communication settings on each of the communication devices being powered and the management device from a first setting for communication in the first aspect to a second setting for performing communication in a second aspect in which the time limit is longer than in communication in the first aspect, and the management device and the communication devices perform communication in the second aspect after the communication settings are switched to the second setting.

### Supplement 10

The communication network system according to supplement 9, wherein: the management device transmits, through communication in the first aspect, a wake confirmation frame to confirm whether the communication devices are available for communication, each of the communication devices, when the wake confirmation frame is received, transmits a wake response frame indicating that the communication device is available for communication, and the management device, when the wake response frame is received, determines that the communication device that has transmitted the wake response frame is available for communication.

### Supplement 11

The communication network system according to supplement 10, wherein: the management device stores information on the communication devices to be powered in each powering status of the power supply equipment, the management device, when the change occurs in powering status of the power supply equipment, confirms the communication devices to be powered in a powering status of the power supply equipment after the change, based on the stored information, the management device transmits the wake confirmation frame repeatedly until the wake response frames are received from all the communication devices being powered, and the management device, when the wake response frames are received from all the communication devices being powered, switches the communication settings from the first setting to the second setting.

### Supplement 12

The communication network system according to supplement 10 or 11, wherein the communication devices transmit the wake response frame repeatedly as long as the communication devices continue to receive the wake confirmation frame.

### Supplement 13

The communication network system according to any one of supplements 10 to 12, wherein the management device performs transmitting a wake information frame together with the wake confirmation frame through communication in the first aspect, the wake information frame being information on the communication device that has transmitted the wake response frame.

### Supplement 14

The communication network system according to supplement 10 or 13, wherein each of the communication devices, when grasping, through communication in the first aspect, that the communication device to interact with in communication in the second aspect is available for communication, switches the communication setting of the communication device from the first setting to the second setting, and starts communication in the second aspect with the communication device to interact with.

### Supplement 15

The communication network system according to any one of supplements 9 to 14, wherein: the management device transmits, through communication in the first aspect, a transition confirmation frame that indicates switching from communication in the first aspect to communication in the second aspect, the management device, after transmitting the transition confirmation frame, switches the communication setting of the management device from the first setting to the second setting, each of the communication devices, when the transition confirmation frame is received, transmits a transition acknowledgment frame that is a response to the transition confirmation frame, and each of the communication devices, after transmitting the transition acknowledgment frame, switches the communication setting of the communication device from the first setting to the second setting.

### Supplement 16

The communication network system according to any one of supplements 9 to 15, wherein: the communication network system is mounted in a vehicle, and the management device and the communication devices are electronic control units in the vehicle.

### Supplement 17

A vehicle including the communication network system according to any one of supplements 9 to 16

## Claims

1. A management device (20) in a communication network system (40) including a plurality of communication devices and the management device (20), each of the communication devices being configured to have physical-layer collision avoidance functionality that, when the communication device has data to transmit, starts transmitting the data during a time limit when an own turn comes after the communication device detects a beacon signal (BS), the communication devices being configured to become available for communication by being powered, the management device (20) being configured to, after the management device (20) transmits the beacon signal (BS), transmit the beacon signal (BS) again when confirming that all the communication devices that are available for communication have taken turns transmitting the data, the management device (20) comprising:
processing circuitry (21); and
a storage device (22), wherein the processing circuitry (21) is configured to perform
when a change occurs in powering status of power supply equipment for the communication devices in the communication network system (40), confirming, through communication in a first aspect with the communication devices, whether the communication devices are available for communication,
after confirming that the communication devices being powered in the communication network system (40) are available for communication, switching communication settings on each of the communication devices being powered and the management device (20) from a first setting for the communication in the first aspect to a second setting for performing communication in a second aspect in which the time limit is longer than in the communication in the first aspect, and
after the communication settings are switched to the second setting, performing the communication in the second aspect with the communication devices.

2. The management device (20) according to claim 1, wherein:
the communication network system (40) is mounted in a vehicle (50);
the management device (20) and the communication devices are electronic control units included in the vehicle (50); and
the processing circuitry (21) is configured to detect that the change occurs in the powering status of the power supply equipment when switching of a power state of the vehicle (50) takes place, the power state being classified according to the number and type of devices that are powered.

3. The management device (20) according to claim 1, wherein the processing circuitry (21) is configured to perform
transmitting, through the communication in the first aspect, a wake confirmation frame (WCF) to confirm whether the communication devices are available for communication, and
when the processing circuitry (21) receives a wake response frame (WRF) indicating availability for communication from the communication device that has received the wake confirmation frame (WCF), determining that the communication device is available for communication.

4. The management device (20) according to claim 3, wherein:
the storage device (22) is configured to store information on the communication devices to be powered in each powering status of the power supply equipment; and
the processing circuitry (21) is configured to perform
when the change occurs in the powering status of the power supply equipment, confirming the communication devices to be powered in a powering status of the power supply equipment after the change, based on the information stored in the storage device (22),
transmitting the wake confirmation frame (WCF) repeatedly until the processing circuitry (21) receives a plurality of the wake response frames (WRF) from all the communication devices being powered, and
when the processing circuitry (21) receives the wake response frames (WRF) from all the communication devices being powered, switching the communication settings from the first setting to the second setting.

5. The management device (20) according to claim 3, wherein the processing circuitry (21) is configured to perform transmitting a wake information frame (WDF) together with the wake confirmation frame (WCF) through the communication in the first aspect, the wake information frame (WDF) being information on the communication device that has transmitted the wake response frame (WRF).

6. The management device (20) according to claim 4, wherein the processing circuitry (21) is configured to perform, when the wake response frame (WRF) is not received from the communication device being powered, transmitting a wakeup pulse to the communication device, the wakeup pulse being a signal requesting that the communication device enter an available state for communication.

7. The management device (20) according to claim 4, wherein the processing circuitry (21) is configured to perform
when the wake response frame (WRF) is not received from the communication device being powered, determining that a failure has occurred in the communication device, and
after determining the failure in the communication device, switching the communication settings on the communication devices that have transmitted the wake response frames (WRF) and the management device (20) from the first setting to the second setting.

8. The management device (20) according to any one of claims 1 to 7, wherein the processing circuitry (21) is configured to perform, when switching the communication settings on the communication devices and the management device (20) from the first setting to the second setting, transmitting, through the communication in the first aspect, a transition confirmation frame (TCF) that indicates switching from the communication in the first aspect to the communication in the second aspect.

9. A communication network system (40) comprising:
a plurality of communication devices each being configured to have physical-layer collision avoidance functionality that, when the communication device has data to transmit, starts transmitting the data during a time limit when an own turn comes after the communication device detects a beacon signal (BS), the communication devices being configured to become available for communication by being powered; and
a management device (20) configured to, after transmitting the beacon signal (BS), transmit the beacon signal (BS) again when confirming that all the communication devices that are available for communication have taken turns transmitting the data, wherein
the management device (20) is configured to, when a change occurs in powering status of power supply equipment for the communication devices in the communication network system (40), confirm, through communication in a first aspect with the communication devices, whether the communication devices are available for communication,
the management device (20) is configured to, after confirming that the communication devices being powered in the communication network system (40) are available for communication, switch communication settings on each of the communication devices being powered and the management device (20) from a first setting for the communication in the first aspect to a second setting for performing communication in a second aspect in which the time limit is longer than in the communication in the first aspect, and
the management device (20) and the communication devices are configured to perform the communication in the second aspect after the management device (20) switches the communication settings to the second setting.

10. The communication network system (40) according to claim 9, wherein:
the management device (20) is configured to transmit, through the communication in the first aspect, a wake confirmation frame (WCF) to confirm whether the communication devices are available for communication;
each of the communication devices is configured to, when the communication device receives the wake confirmation frame (WCF), transmit a wake response frame (WRF) indicating that the communication device is available for communication; and
the management device (20) is configured to, when the management device (20) receives the wake response frame (WRF), determine that the communication device that has transmitted the wake response frame (WRF) is available for communication.

11. The communication network system (40) according to claim 10, wherein the communication devices are configured to transmit the wake response frame (WRF) repeatedly as long as the communication devices continue to receive the wake confirmation frame (WCF).

12. The communication network system (40) according to claim 10, wherein:
each of the communication devices is configured to, when grasping, through the communication in the first aspect, that the communication device to interact with in the communication in the second aspect is available for communication, switch the communication setting of the communication device from the first setting to the second setting; and
the communication device is configured to start the communication in the second aspect with the communication device to interact with.

13. The communication network system (40) according to claim 9 or 10, wherein:
the management device (20) is configured to transmit, through the communication in the first aspect, a transition confirmation frame (TCF) that indicates switching from the communication in the first aspect to the communication in the second aspect;
the management device (20) is configured to, after the management device (20) transmits the transition confirmation frame (TCF), switch the communication setting of the management device (20) from the first setting to the second setting;
each of the communication devices is configured to, when the communication device receives the transition confirmation frame (TCF), transmit a transition acknowledgment frame (TRF) that is a response to the transition confirmation frame (TCF); and
each of the communication devices is configured to, after the communication device transmits the transition acknowledgment frame (TRF), switch the communication setting of the communication device from the first setting to the second setting.

14. The communication network system (40) according to any one of claims 9 to 12, wherein:
the communication network system (40) is mounted in a vehicle (50); and
the management device (20) and the communication devices are electronic control units in the vehicle (50).

15. A vehicle (50) comprising the communication network system (40) according to claim 9.
